# EUROPÄISCHE PATENTSCHRIFT

(11) **EP 0 730 081 B1**
(45) Veröffentlichungstag und Bekanntmachung des Hinweises auf die Patenterteilung: **21.07.1999**
(21) Anmeldenummer: 96102875.0
(22) Anmeldetag: 27.02.1996
(51) Int. Cl.: E06B 9/323, E06B 9/50, A47H 1/13

(54) **Klemmhalterung für die Montage eines Dekorationsartikels, einer Sonnen- oder Blickschutzvorrichtung oder dergleichen**
Bracket for mounting a decorative article, a sun- or view-protecting device or similar
Dispositif de fixation pour le montage d'un élément décoratif, de protection solaire ou de protection contre la vue ou similaire

(30) Priorität: 28.02.1995 DE 29503342 U
(43) Veröffentlichungstag der Anmeldung: 04.09.1996
(73) Patentinhaber: friedola Gebr. Holzapfel GmbH & Co. KG, 37276 Meinhard-Frieda (DE)
(72) Erfinder: Henning, Wolfgang, 37269 Eschwege (DE)
(74) Vertreter: Schwabe - Sandmair - Marx

(56) Entgegenhaltungen:
- DE-U- 9 408 238
- US-A- 1 332 013

## Beschreibung

Die Erfindung bezieht sich auf eine Klemmhalterung für die Montage eines Dekorationsartikels, einer Sonnen- oder Blickschutzvorrichtung oder dergleichen an einem Rahmen eines Fensters, einer Tür oder dergleichen nach dem Oberbegriff des Patentanspruchs 1. Derartige Klemmhalterungen haben den Vorteil, daß die Sonnen- oder Blickschutzvorrichtung ohne Bohren oder andere den Rahmen beschädigende Arbeiten binnen kurzer Zeit montierbar ist. Entsprechend kann die Klemmhalterung ohne Spuren zu hinterlassen auch problemlos wieder von dem Rahmen entfernt werden, so daß sie insbesondere für die Verwendung in Mietwohnungen geeignet sind, in denen keine dauerhaften Veränderungen der Mietsache vorgenommen werden dürfen.

Eine Klemmhalterung nach dem Oberbegriff des Patentanspruchs 1 ist aus der EP-A-0 358 742 bekannt. Hier ist das Winkelstück dreiteilig ausgebildet. Es weist einen Grundkörper, eine Gewindespindel und eine Abdeckung auf. Die Gewindespindel ist um ihre Achse von außen verdrehbar aber ansonsten ortsfest unterhalb der Abdeckung angeordnet. Dabei dienen Bereiche des Grundkörpers und der Abdeckung als Lagerung für die Gewindespindel. Das Klemmstück weist einen abgewinkelten Führungsbereich auf, der parallel an dem zweiten Arm des Winkelstücks anliegt. Ein Fortsatz des Klemmstücks weist ein Innengewinde auf, das auf der Gewindespindel angeordnet ist. Durch Verdrehen der Gewindespindel verschiebt sich das Klemmstück entlang dem zweiten Arm des Winkelstücks in Abhängigkeit von der Drehrichtung der Gewindespindel. Auf diese Weise ist das Klemmstück an den Rahmen andrückbar, wobei es von der Gewindespindel in der angedrückten Stellung gehalten wird. Das Klemmstück kann als Haltevorrichtung ausgebildet sein, die für eine spezielle Sonnen- oder Blickschutzvorrichtung vorgesehen ist.

Die aus der EP-A-0 358 742 bekannte Klemmhalterung weist verschiedene Nachteile auf. Dies ist zunächst ihr relativ komplizierter Aufbau. Halbwegs kostengünstig kann er nur erfolgen, falls der Grundkörper des Winkelstücks und das Klemmstück als Blechprägeteile ausgebildet sind. Dies bedeutet aber automatisch, daß das auf der Gewindespindel angeordnete Innengewinde in dem Fortsatz des Klemmstücks, nur sehr kurz sein kann. Dies hat zur Folge, daß nur geringe Klemmkräfte aufbringbar sind, da anderenfalls eine Zerstörung des Innengewindes beim Verdrehen der Gewindespindel erfolgt. Darüberhinaus erfordert das Anbringen der bekannten Klemmhalterung, insbesondere wenn zuvor noch ein bestimmtes Klemmstück mit einer speziellen Haltevorrichtung eingesetzt werden muß, einige Minuten, weil sowohl beim Anbringen der Klemmhalterung als auch beim Austauschen des Klemmstücks viel toter Weg durch behutsames Verdrehen der Gewindespindel überbrückt werden nuß.

Eine weitere Klemmhalterung nach dem Oberbegriff des Patentanspruchs 1 ist aus dem DE-U-94 03 238 bekannt. Hier weist der zweite Arm des Winkelstücks ein durchgehendes, sich von dem ersten Arm weg erstreckendes Langloch auf. Durch dieses Langloch tritt das Klemmstück mit einer Einschnürung hindurch, wobei der jenseits der Einschnürung angeordnete Bereich des Klemmstücks abgewinkelt ist und flach auf dem zweiten Arm des Winkelstücks anliegt. Auf diese Weise wird eine Führung für das Klemmstück an dem zweiten Arm des Winkelstücks erreicht. Innerhalb des Langlochs kann das Klemmstück verschoben und somit an den Rahmen angedrückt werden. Zum Festklemmen der Klemmhalterung an dem Rahmen ist in dem freien Ende des Klemmstücks eine Gewindebohrung vorgesehen, durch die eine Klemmschraube hindurchtritt. Durch Eindrehen der Klemmschraube wird der Rahmen beaufschlagt. Dabei bewirken die Hebelverhältnisse, daß sich das Klemmstück mit seiner Einschnürung an dem zweiten Arm des Winkelstücks festsetzt. Das Langloch in dem zweiten Arm des Winkelstücks dient nicht nur zur Aufnahme des Klemmstücks im Bereich seiner Einschnürung. Vielmehr besteht die Möglichkeit, verschiedene Haltevorrichtungen für spezielle Sonnen- oder Blickschutzvorrichtungen an den zweiten Arm des Winkelstücks anzuschrauben.

Die aus dem DE-U-94 08 238 bekannte Klemmhalterung weist zwar einen einfachen Aufbau auf, auch hier besteht jedoch die Gefahr, daß das kurze Innengewinde in dem Klemmstück beim Aufbringen größerer Klemmkräfte zerstört wird. Darüber hinaus besteht die Gefahr, daß sich die Klemmschraube in den Rahmen eindrückt, weil das gesamte Klemmstück nur über die Spitze der Klemmschraube punktförmig an dem Rahmen anliegt. Hiermit sind irreversible Beschädigungen des Rahmens verbunden, die durch die Verwendung einer Klemmhalterung nach dem Oberbegriff des Patentanspruchs 1 gerade vermieden werden sollen.

Der Erfindung liegt daher die Aufgabe zugrunde, eine Klemmhalterung aufzuzeigen, die einen unkomplizierten Aufbau aufweist und ohne Beschädigungen des Rahmens anbringbar ist.

Erfindungsgemäß wird diese Aufgabe durch die Merkmale des Patentanspruchs 1 gelöst. Vorteilhafte Ausführungsformen und Weiterbildungen sind in den Unteransprüchen 1 bis 9 beschrieben.

Die neue Klemmhalterung nutzt das Prinzip Klemmzwinge/Kabelbinder. Das Klemmstück braucht nur fest an den Rahmen angedrückt zu werden, bis es unter Spannung an dem Rahmen anliegt. In dieser Stellung wird es durch seine in die Zahnung in den zweiten Arm des Winkelstücks eingreifende Federzunge arretiert. Dabei kann keine Überbelastung eines Bestandteils der Klemmhalterung eintreten. Durch Herunterdrücken der Federzunge und Zurückziehen des Klemmstücks kann die Klemmhalterung von dem Rahmen abgelöst und wiederverwendet werden.

Beide Teile der Klemmhalterung, das Winkelstück und das Klemmstück können einstückig im Kunststoff-Spritzgußverfahren hergestellt sein, so daß eine extrem kostengünstige Fertigung möglich ist.

Wie bei der aus der EP-A-0 358 742 bekannten Klemmhalterung kann das Klemmstück direkt als Haltevorrichtung für bestimmte Sonnen- oder Blickschutzvorrichtungen ausgebildet sein. Es ist jedoch bevorzugt, wenn diese Haltevorrichtungen als separate, an dem Klemmstück befestigbare Bauteile vorgesehen sind.

Die Erfindung wird im folgenden anhand von Ausführungsbeispielen näher erläutert und beschrieben, dabei zeigt
- Figur 1: eine Ausführungsform der Klemmhalterung in perspektivischer Darstellung,
- Figur 2: das Winkelstück der Klemmhalterung gemäß Figur 1 in einer Draufsicht von oben,
- Figur 3: das Winkelstück gemäß Figur 2 im Querschnitt,
- Figur 4: das Klemmstück der Klemmhalterung gemäß Figur 1 in einer Ansicht von hinten,
- Figur 5: eine abgewandelte Ausführungsform des Klemmstücks in einer Ansicht von vorne,
- Figuren 6-8: verschiedene Ansichten eines in ein Langloch in dem Klemmstück eingerasteten Befestigungsfußes,
- Figur 9: eine Blende,
- Figur 10: eine erste Haltevorrichtung,
- Figur 11: eine zweite Haltevorrichtung,
- Figur 12: ein Gegenprofil zu der Haltevorrichtung gemäß Figur 11,
- Figur 13: eine dritte Haltevorrichtung und
- Figur 14: ein Gegenprofil zu der Haltevorrichtung gemäß Figur 14.

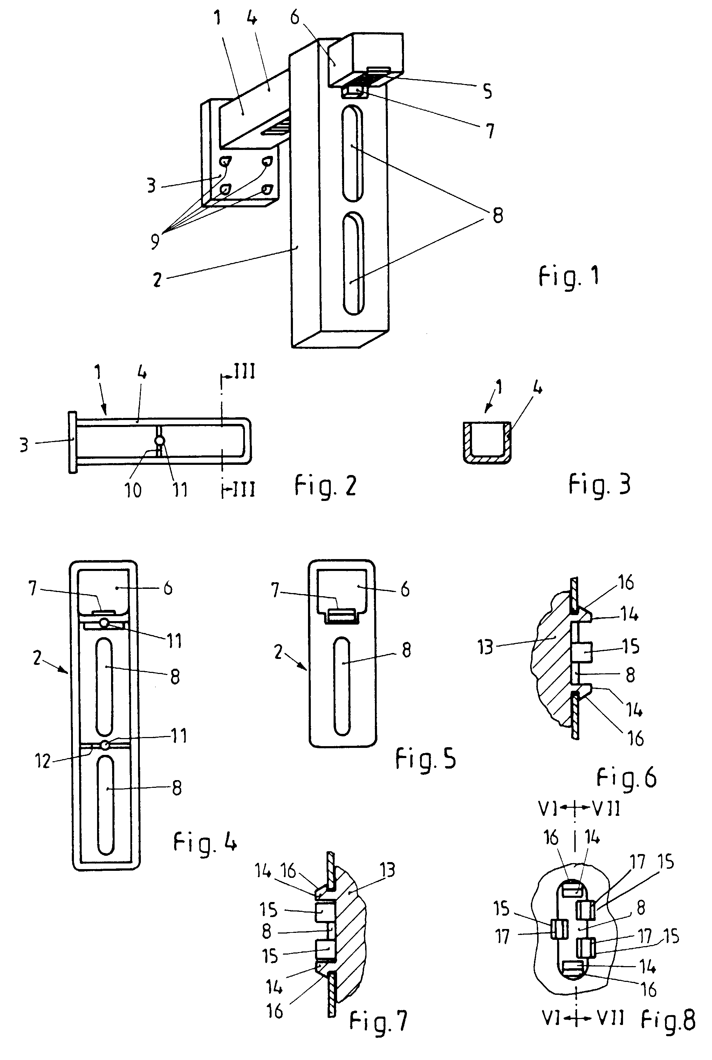

Die in Figur 1 dargestellte Klemmhalterung 1-9 weist ein Winkelstück 1 und ein Klemmstück 2 auf. Das Winkelstück 1 umfaßt einen plattenförmigen ersten Arm 3 und einen zweiten Arm 4. Von dem ersten Arm stehen dornartige Fortsätze 9 parallel zu dem zweien Arm ab. An dem zweiten Arm 4 ist eine Zahnung 5 vorgesehen. Die Zahnung 5 besteht aus zu dem ersten Arm 3 hin ansteigenden Abschnitten, zwischen denen senkrechte Abschnitte angeordnet sind, und springt hinter der umgebenden Oberfläche des zweiten Arms zurück. Auf dem zweiten Arm 4 ist das Klemmstück 2 verschiebbar gelagert, wobei der zweite Arm 4 durch eine Durchbrechung 6 in dem Klemmstück 2 hindurchtritt. Im Bereich der Durchbrechung 6 weist das Klemmstück 2 eine Federzunge 7 auf, die in die Zahnung 5 in dem zweiten Arm 4 einrastet und so einem Abziehen des Klemmstücks 2 von dem zweiten Arm 4 entgegenwirkt. Ein Vorschieben des Klemmstücks 2 in Richtung auf den ersten Arm 3 ist durch die Ausbildung der Zahnung 5 jedoch möglich. In dem Klemmstück 2 sind zwei Langlöcher 8 vorgesehen, mit deren Hilfe Sonnen- oder Blickschutzvorrichtungen an der Klemmhalterung befestigbar sind.

Die Klemmhalterung 1 bis 9 selbst ist zur Befestigung an einem Rahmen eines Fensters, einer Tür oder dergleichen vorgesehen, wobei der plattenförmige erste Arm 3 des Winkelstücks 1 den Rahmen hintergreift und mit den dornartigen Fortsätzen 9 an der Rückseite des Rahmens zur Anlage kommt. Der zweite Arm 4 des Winkelstücks 1 steht nach vorne über den Rahmen über. An dem zweiten Arm 4 ist das Klemmstück 2 verschiebbar und an den Rahmen andrückbar. Wenn hierbei eine gewisse Kraft beim Zusammendrücken des zweiten Arms 3 und des Klemmstücks 2 aufgebracht wird, ist die Klemmhalterung zuverlässig an dem Rahmen fixiert, wobei das Klemmstück 2 mit seiner Rückseite flächig an dem Rahmen anliegt. Zum Abnehmen der Klemmhalterung von dem Rahmen ist die Federzunge 7 aus der Zahnung 5 auszuheben. Dann kann das Klemmstück 2 frei zurückgezogen werden. Bei der normalen Verwendung der Klemmhalterung können keine Kräfte auftreten, die zur Zerstörung oder Beschädigung eines Bestandteils der Klemmhalterung führen.

Bei beiden Teilen der Klemmhalterung, d.h. sowohl bei dem Winkelstück 1 als auch bei dem Klemmstück 2 handelt es sich um einfache Spritzgußteile aus Kunststoff. In Figur 2 ist das Winkelstück 1 in einer Ansicht von oben dargestellt. Figur 3 zeigt einen dazugehörigen Querschnitt. Bei dem zweiten Arm 4 des Winkelstücks 1 handelt es sich im wesentlichen um einen Profilabschnitt mit U-förmigem Querschnitt, der auf der dem ersten Arm 3 des Winkelstücks abgewandten Seite offen ist. An dem freien Ende des zweiten Arms 4 ist der Profilabschnitt hingegen geschlossen ausgebildet und an seinem anderen Ende wird er durch den plattenförmigen ersten Arm 3 des Winkelstücks 1 verschlossen. Im Mittelbereich weist der Profilabschnitt einen Quersteg 10 auf, an dem ein Anspritzpunkt 11 zu erkennen ist.

Figur 4 zeigt eine Rückansicht des Klemmstücks 2. Auch dieses besteht im wesentlichen aus einem Profilabschnitt mit U-förmigem Querschnitt, der an seinem freien Ende geschlossen ausgebildet ist. An dem anderen Ende ist die Durchbrechung 6 ausgeformt, die zur Aufnahme des zweiten Arms 4 des Winkelstücks 1 vorgesehen ist und in die von unten die Federzunge 7 vorsteht. Anspritzpunkte 11 sind hier einmal im Bereich der Federzunge 7 und zum anderen im Bereich eines Querstegs 12 ersichtlich.

Während die Ausführungsform des Klemmstücks 2 gemäß den Figuren 1 und 4 zwei Langlöcher aufweist, ist bei der Ausführungsform gemäß Figur 5 nur ein einziges Langloch vorgesehen. Dementsprechend ist das Klemmstück 2 auch deutlich kürzer ausgebildet. Hierdurch wird zwar die kraftabtragende Auflagefläche des Klemmstücks 2 auf dem Rahmen reduziert, aber die Klemmhalterung wird dadurch auch etwas unauffälliger. Außerdem gilt selbst für das Klemmstück gemäß Figur 5, daß es von dem zweiten Arm 4 des Winkelstücks 2 mehr als doppelt so weit absteht, wie dessen erster Arm 3.

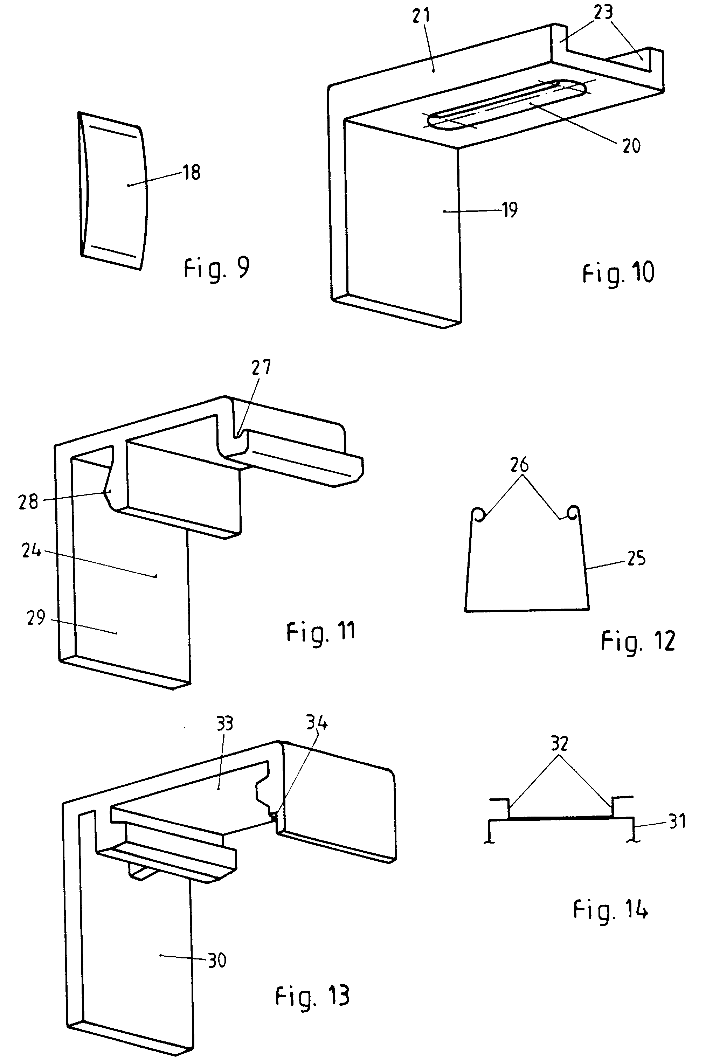

In den Figuren 6-8 ist ein in ein Langloch 8 eingerasteter Befestigungsfuß 13 wiedergegeben. Dabei sind die Figuren 6 und 7 aneinandergrenzende Querschnitte in der Haupterstreckungsrichtung des Langlochs und bei der Figur 8 handelt es sich um eine Rückansicht. Der Befestigungsfuß 13 weist 5 Rastnasen 14 und 15 auf, die alle Kanten des Langlochs 8 hintergreifen. Dabei sind die Rastnasen 14 an den beiden Enden des Langlochs 8 angeordnet, während die Rastnasen 15 über die Längskanten des Langlochs 8 verteilt sind. An den Rastnasen 14 und 15 sind Abschrägungen 16 und 17 vorgesehen, die ein Einführen des Befestigungsfußes 13 in das Langloch 8 unter Zurückbiegen der Rastnasen 14 und 15 ermöglicht, bis sie hinter dem Langloch 8 in ihre Ausgangsposition zurückspringen.

Ein Befestigungsfuß gemäß den Figuren 6-8 kann zur Befestigung verschiedener, vorzugsweise einstückig mit dem Befestigungsfuß ausgebildeter Haltevorrichtungen über die Langlöcher 8 an dem Klemmstück 2 genutzt werden. Es ist jedoch auch möglich, mit dem Befestigungsfuß 13 eine in Figur 9 dargestellte Blende 18 mit einem rückwärtigen und daher hier nicht sichtbaren Befestigungsfuß 13 zu versehen, um eine Abdeckungsmöglichkeit für ein Langloch 8 zu schaffen.

Figur 10 zeigt demgegenüber einen mit dem erneut nicht sichtbaren Befestigungsfuß 13 in ein Langloch 8 einrastbaren Träger 19, der seinerseits ein Langloch 20 in einem senkrecht zu dem Klemmstück 2 verlaufenden Arm 21 aufweist. Auf der Rückseite des Arms 21 wird das Langloch 20 durch zwei parallele Schienen 23 begrenzt. Die parallelen Schienen 23 führen Vierkantmuttern oder die Köpfe von Vierkantschrauben bei der Montage von Sonnen- oder Blickschutzvorrichtungen unter Zuhilfenahme des Langlochs 20. Eine solche Führung wird auch im Inneren des Klemmstücks 2 durch den im Querschnitt U-förmigen Profilabschnitt bei Verwendung der Langlöcher 8 zum Anschrauben irgendwelcher bauteile bewirkt.

Figur 11 zeigt einen Klemmhalter 24, wie er mit einem Klemmfuß 13 gemäß den Figuren 6 bis 8 in ein Langloch 8 in dem Klemmstück 2 einrastbar ist. Der Klemmhalter 24 ist zur Befestigung einer Jalousette vorgesehen, deren Grundkörper 25 den in Figur 12 des skizzierten Querschnitts aufweist. Zur Montage ist eine Bördelung 26 des Grundkörpers 25 in die am freien Ende des Klemmhalters 24 ausgebildete Vertiefung 27 einzulegen. Dann ist die gegenüberliegende Bördelung 26 von unten hinter den Vorsprung 28 zu klemmen. Hierdurch wird ein ausreichend sicherer Sitz des Grundkörpers 25 erreicht, da an diesem insbesondere vorne angreifende Kräfte zuverlässig durch die Vertiefung 27 abgetragen werden. Darüberhinaus spricht nichts dagegen, daß sich der Grundkörper 25 auch noch an der Fläche 29 des Klemmhalter 24 abstützt.

Der in Figur 13 dargestellte Klemmhalter 30 ist zur Befestigung eines Grundkörpers 31 gemäß Figur 14 vorgesehen, wie er beispielsweise bei Plisseebehängen üblich ist. Dabei greift ein hutförmiges Profil 32 in eine T-förmige Ausnehmung 33 in dem Klemmhalter 30 ein. Um den Grundkörper 31 wieder freizugeben, ist eine Aussparung 34 vorgesehen, die das Wegdrücken des freien Endes des Klemmhalters 30 mit einem Schraubenzieher oder dergleichen ermöglicht.

Montagevorrichtungen, wie sie in den Figuren 10, 11 und 13 dargestellt sind, können in Verbindung mit dem Klemmstück 2 auch ohne die zusätzliche Verwendung des Winkelstücks 1 eingesetzt werden. So ist es möglich, das Klemmstück 2 im Bereich eines Langlochs 8 auf eine Fläche aufzuschrauben und im Bereich des anderen Langlochs 8 einen Befestigungsfuß 13 einer Haltevorrichtung einzurasten. Hierdurch wird ein universelles Montagesystem geschaffen. Diese Ausführungsarten sind vom Gegenstand des unabhängigen Anspruchs nicht abgedeckt.

### BEZUGSZEICHENLISTE

- 1 -: Winkelstück
- 2 -: Klemmstück
- 3 -: erster Arm
- 4 -: zweiter Arm
- 5 -: Zahnung
- 6 -: Durchbrechung
- 7 -: Federzunge
- 8 -: Langloch
- 9 -: dornartiger Vorsprung
- 10 -: Quersteg
- 11 -: Anspritzpunkt
- 12 -: Quersteg
- 13 -: Befestigungsfuß
- 14 -: Rastnase
- 15 -: Rastnase
- 16 -: Abschrägung
- 17 -: Abschrägung
- 18 -: Blende
- 19 -: Träger
- 20 -: Langloch
- 21 -: Arm
- 23 -: Schiene
- 24 -: Klemmträger
- 25 -: Grundkörper
- 26 -: Bördelung
- 27 -: Vertiefung
- 28 -: Vorsprung
- 29 -: Fläche
- 30 -: Klemmträger
- 31 -: Grundkörper
- 32 -: Hutprofil
- 33 -: Ausnehmung
- 34 -: Aussparung

## Patentansprüche

1. Klemmhalterung für die Montage eines Dekorationsartikels, einer Sonnen- oder Blickschutzvorrichtung oder dergleichen an einem Rahmen eines Fensters, einer Tür oder dergleichen, mit einem Winkelstück (1) und mit einem Klemmstück (2), wobei das Winkelstück (1) mit einem ersten Arm (3) den Rahmen hintergreift und mit einem zweiten Arm (4) nach vorne über den Rahmen vorsteht und wobei das Klemmstück (2) an dem zweiten Arm (4) des Winkelstücks (1) verschiebbar gelagert und zum Einklemmen des Rahmens zwischen dem ersten Arm (3) des Winkelstücks (1) und dem Klemmstück (2) an den Rahmen andrückbar ist, **dadurch gekennzeichnet**, daß an dem zweiten Arm (4) des Winkelstücks eine Zahnung (5) vorgesehen ist und daß das Klemmstück (2) eine Durchbrechung (6), durch die der zweite Arm (4) hindurchtritt, und im Bereich seiner Durchbrechung (6) eine Federzunge (7) aufweist, die in die Zahnung (5) einrastet.

2. Klemmhalterung nach Anspruch 1, **dadurch gekennzeichnet**, daß der zweite Arm (4) des Winkelstücks (1) die Zahnung (5) auf der Seite aufweist, an der der erste Arm (3) und das Klemmstück (2) abstehen.

3. Klemmhalterung nach Anspruch 1 oder 2, **dadurch gekennzeichnet**, daß der zweite Arm (4) des Winkelstücks (1) ein Profilabschnitt ist, der an seinem freien Ende geschlossen ausgebildet ist und der an seinem anderen Ende durch eine den ersten Arm (3) des Winkelstücks (1) ausbildende Platte verschlossen ist.

4. Klemmhalterung nach Anspruch 3, **dadurch gekennzeichnet**, daß der Profilabschnitt einen U-förmigen Querschnitt aufweist, der auf der dem ersten Arm (3) des Winkelstücks (1) und dem Klemmstück (2) abgewandten Seite offen ist.

5. Klemmhalterung nach einem der Ansprüche 1 bis 4, **dadurch gekennzeichnet**, daß von dem ersten Arm (3) des Winkelstücks (1) dornartige Vorsprünge (9) auf das Klemmstück (2) hin vorstehen.

6. Klemmhalterung nach einem der Ansprüche 1 bis 5, **dadurch gekennzeichnet**, daß das Klemmstück (2) ein an seinem freien Ende geschlossen ausgebildeter Profilabschnitt ist.

7. Klemmhalterung nach Anspruch 6, **dadurch gekennzeichnet**, daß der Profilabschnitt einen U-förmigen Querschnitt aufweist, der zu dem ersten Arm (3) des Winkelstücks (1) hin geöffnet ist.

8. Klemmhalterung nach einem der Ansprüche 1 bis 7, **dadurch gekennzeichnet**, daß in dem Klemmstück (2) mindestens ein Langloch (8) vorgesehen ist, das sich von dem zweiten Arm (4) des Winkelstück (1) weg erstreckt.

9. Klemmhalterung nach einem der Ansprüche 1 bis 8, **dadurch gekennzeichnet**, daß das Klemmstück (2) mindestens doppelt so weit von dem zweiten Arm (4) des Winkelstücks (1) absteht wie dessen erster Arm (3).

10. Klemmhalterung nach Anspruch 9, **dadurch gekennzeichnet**, daß mindestens eine Blende (19) und/oder eine Haltevorrichtung (19, 14, 30) für ein Rollo eine Jalousette oder dergleichen vorgesehen ist, die einen in das Langloch (8) in dem Klemmstück (2) einrastbaren Befestigungsfuß (13) aufweist.

## Claims

1. Bracket for mounting a decorative article, a sun or view protection device or similar, on a window frame, a door or similar, comprising an angle member (1), and a fixing member (2), the angle member (1) being provided with a first arm (3) reaching around the frame, and with a second arm (4), projecting from the front side of the frame, wherein the fixing member (2) is movably mounted on the second arm (4) of the angle member (1), and can be pressed against the frame for fixing the frame between the first arm (3) of the angle member (1) and the fixing member (2), characterised in that on the second arm (4) of the angle member a denticulation (5) is provided, and that the fixing member (2) has a pass through opening (6) for the second arm (4), and in the area of the opening (6) a spring tongue (7), coming into engagement with the denticulation.

2. Bracket according to patent claim 1, characterised in that the second arm (4) of the angle member (1) is provided with the denticulation (5) on that side, on which the first arm (3) and the fixing member (2) project.

3. Bracket according to patent claim 1 or 2, characterised in that the second arm (4) of the angle member (1) is a length of a profile, which is closed on it's free end, and closed by a plate on the other end, forming the first arm (3) of the angle member.

4. Bracket according to patent claim 3, characterised in that the length of a profile is in the form of a U, open on the side opposite the first arm (3) of the angle member (1) and the fixing member (2).

5. Bracket according to any of patent claims 1 to 4, characterised in that thorn like projections (9) project in the direction of the fixing member (2).

6. Bracket according to any of patent claims 1 to 5, characterised in that the fixing member (2) is formed by a length of a profile, closed on it's free end.

7. Bracket according to patent claim 6, characterised in that the length of a profile has a cross-section of a U, open in the direction of the first arm (3) of the angle member (1).

8. Bracket according to any of patent claims 1 to 7, characterised in that in the fixing member (2) at least one long hole (8) is provided, extending from the second arm (4) of the angle member (1).

9. Bracket according to any of patent claims 1 to 8, characterised in that the fixing member (2) is projecting at least twice as far from the second arm (4) of the angle member (1) as the first arm (3) thereof.

10. Bracket according to patent claim 9, characterised in that at least a blind (19) and/or a mounting device (19, 14, 30) for a Rollo or a Jalousette, etc. is provided, having a mounting foot (13) that can be locked in the long hole (8) of the fixing member (2).

## Revendications

1. Dispositif de fixation pour le montage d'un élément décoratif, de protection solaire ou de protection contre la vue ou similaire sur un cadre d'une fenêtre, d'une porte ou similaire, comprenant une pièce angulaire (1) et une pièce de serrage (2), la pièce angulaire (1) entrant en prise au moyen d'un premier bras (3) avec l'arrière du cadre et faisant saillie vers l'avant par-dessus le cadre avec un deuxième bras (4), et la pièce de serrage (2) étant disposée de manière coulissante sur le deuxième bras (4) de la pièce angulaire (1) et pouvant être pressée contre le cadre pour enserrer le cadre entre le premier bras (3) de la pièce angulaire (1) et la pièce de serrage (2), caractérisé en ce qu'une denture (5) est prévue sur le deuxième bras (4) de la pièce angulaire et en ce que la pièce de serrage (2) présente un jour (6) que traverse le deuxième bras (4) et, dans la région de son jour (6), une languette élastique (7) qui s'encliquette dans la denture (5).

2. Dispositif de fixation selon la revendication 1, caractérisé en ce que le deuxième bras (4) de la pièce angulaire (1) présente la denture (5) sur le côté d'où s'étendent le premier bras (3) et la pièce de serrage (2).

3. Dispositif de fixation selon la revendication 1 ou 2, caractérisé en ce que le deuxième bras (4) de la pièce angulaire (1) est un segment profilé qui est fermé a son extrémité libre et qui est obturé à son autre extrémité par une plaque formant le premier bras (3) de la pièce angulaire (1).

4. Dispositif de fixation selon la revendication 3, caractérisé en ce que le segment profilé présente une section en forme de U qui est ouverte du côté opposé au premier bras (3) de la pièce angulaire (1) et à la pièce de serrage (2).

5. Dispositif de fixation selon une des revendications 1 à 4, caractérisé en ce que des saillies (9) en forme d'épine font saillie du premier bras (3) de la pièce angulaire (1) en direction de la pièce de serrage (2).

6. Dispositif de fixation selon une des revendications 1 à 5, caractérisé en ce que la pièce de serrage (2) est un segment de profilé fermé à son extrémité libre.

7. Dispositif de fixation selon la revendication 6, caractérisé en ce que le segment profilé présente une section en forme de U qui est ouverte en direction du premier bras (3) de la pièce angulaire (1).

8. Dispositif de fixation selon une des revendications 1 à 7, caractérisé en ce dans la pièce de serrage (2), il est prévu au moins un trou oblong (8) qui s'étend en s'éloignant du deuxième bras (4) de la pièce angulaire (1).

9. Dispositif de fixation selon une des revendications 1 à 8, caractérisé en ce la pièce de serrage (2) s'étend au moins deux fois plus loin du deuxième bras (4) de la pièce angulaire (1) que le premier bras (3) de celle-ci.

10. Dispositif de fixation selon la revendication 9, caractérisé en ce qu'au moins une garniture (19) et/ou ou un dispositif de retenue (19, 14, 30), qui présente un pied de fixation (13) encliquetable dans le trou oblong (8) de la pièce de serrage (2), est prévu pour un store à enroulement, un store vénitien ou similaire.
